# EUROPEAN PATENT APPLICATION

(11) **EP 4 130 127 A1**
(43) Date of publication of application: **08.02.2023**
(21) Application number: 21781195.9
(22) Date of filing: 29.03.2021
(51) Int. Cl.: C08K 5/04, C08K 5/098, C08L 23/00, C08K 3/26

(54) **ADDITIVE COMPOSITION, RESIN COMPOSITION CONTAINING SAME, PRODUCTION METHOD THEREFOR, AND MOLDED ARTICLE**

(30) Priority: 30.03.2020 JP 2020061314
(71) Applicant: ADEKA CORPORATION, Arakawa-ku Tokyo 116-8554 (JP)
(72) Inventor: YOKOYAMA, Ryo, Saitama-shi, Saitama 336-0022 (JP); NISHI, Hiroki, Saitama-shi, Saitama 336-0022 (JP)
(74) Representative: Gill Jennings & Every LLP
(86) International application number: PCT/JP2021/013346
(87) International publication number: WO 2021/200842

(57) **Abstract**

Provided are: an additive composition capable of imparting excellent mechanical properties to a molded article; a resin composition containing the same; a method of producing the resin composition; and a molded article. The additive composition contains: (A) a nucleating agent; (B) a hydroxy group-containing fatty acid lithium salt; and (C) a hydrotalcite. In this additive composition, the (A) nucleating agent contains an organic oxoacid metal salt, the content of the (B) hydroxy group-containing fatty acid lithium salt is 25 to 400 parts by mass with respect to 100 parts by mass of the (A) nucleating agent, and the content of the (C) hydrotalcite is 25 to 400 parts by mass with respect to 100 parts by mass of the (A) nucleating agent.

## Description

### TECHNICAL FIELD

The present invention relates to: an additive composition; a resin composition containing the same; a method of producing the resin composition; and a molded article. More particularly, the present invention relates to: an additive composition capable of imparting excellent mechanical properties to a molded article; a resin composition containing the same; a method of producing the resin composition; and a molded article.

### BACKGROUND ART

As one of plastic materials having the broadest application field among various general thermoplastic resins, polyolefin-based resins are used in a wide range of applications because of their physical properties, moldability, cost, and the like.

A molded article formed from a polyolefin-based resin is demanded to have excellent mechanical properties in some cases. As a method of imparting excellent mechanical properties to a molded article formed from a polyolefin-based resin, a method of adding a nucleating agent to the polyolefin-based resin is known. As a nucleating agent to be added to a polyolefin-based resin, for example, Patent Document 1 proposes a nucleating agent that contains an aromatic phosphate metal salt.

### RELATED ART DOCUMENT

### PATENT DOCUMENT

[Patent Document 1] JPS63-69853A

### SUMMARY OF THE INVENTION

### PROBLEMS TO BE SOLVED BY THE INVENTION

However, a molded article formed from a polyolefin-based resin to which the nucleating agent disclosed in Patent Document 1 is added has room for further improvement in terms of mechanical properties. Therefore, it is desired to impart superior mechanical properties to a molded article formed from a polyolefin-based resin.

In view of the above, an object of the present invention is to provide: an additive composition capable of imparting excellent mechanical properties to a molded article; a resin composition containing the same; a method of producing the resin composition; and a molded article.

### MEANS FOR SOLVING THE PROBLEMS

The present inventors intensively studied to solve the above-described problem and consequently discovered that, surprisingly, the problem can be solved by an additive composition containing a specific nucleating agent, a fatty acid metal salt having a specific structure, and a hydrotalcite at a specific content ratio, thereby completing the present invention.

That is, the additive composition of the present invention contains: (A) a nucleating agent; (B) a hydroxy group-containing fatty acid lithium salt; and (C) a hydrotalcite, and is characterized in that: the (A) nucleating agent contains an organic oxoacid metal salt; the content of the (B) hydroxy group-containing fatty acid lithium salt is 25 to 400 parts by mass with respect to 100 parts by mass of the (A) nucleating agent; and the content of the (C) hydrotalcite is 25 to 400 parts by mass with respect to 100 parts by mass of the (A) nucleating agent.

In the additive composition of the present invention, the organic oxoacid metal salt preferably contains an aromatic phosphate metal salt, a metal aromatic carboxylate, or a metal alicyclic dicarboxylate. Further, in the additive composition of the present invention, the (B) hydroxy group-containing fatty acid lithium salt preferably contains at least one selected from the group consisting of lithium hydroxystearate and lithium hydroxyoleate. Still further, in the additive composition of the present invention, the (C) hydrotalcite preferably contains a compound represented by the following Formula (2) or (3):

Mg_{y1}Zn_{y2}Al₂(OH)_{2(y1+y2)+4}(CO₃) • pH₂O (2)

(wherein, y1 and y2 represent numbers satisfying 0 ≤ y2/y1 < 10 and 2 ≤ y1 + y2 ≤ 20, and p represents 0 or a positive number)

[Li_{1/3}Al_{2/3}(OH)₂]·[A^{q-}_{1/3q}·pH₂O] (3)

(wherein, A^{q-} represents a q-valent anion, and p represents 0 or a positive number).

The resin composition of the present invention contains: a polyolefin-based resin; (A) a nucleating agent; (B) a hydroxy group-containing fatty acid lithium salt; and (C) a hydrotalcite, and is characterized in that: the (A) nucleating agent contains an organic oxoacid metal salt; the content of the (B) hydroxy group-containing fatty acid lithium salt is 25 to 400 parts by mass with respect to 100 parts by mass of the (A) nucleating agent; the content of the (C) hydrotalcite is 25 to 400 parts by mass with respect to 100 parts by mass of the (A) nucleating agent; and the content of the (A) nucleating agent is 0.001 to 10 parts by mass with respect to 100 parts by mass of the polyolefin-based resin.

In the resin composition of the present invention, the polyolefin-based resin is preferably a polypropylene-based resin, and not less than 90% by mass of monomer units constituting the polypropylene-based resin are preferably propylene units.

Further, the method of producing a resin composition according to the present invention is characterized by including a step of blending the above-described additive composition into a polyolefin-based resin.

Still further, the molded article of the present invention is characterized in that it is obtained by molding the above-described resin composition.

### EFFECTS OF THE INVENTION

According to the present invention, the following can be provided: an additive composition capable of imparting excellent mechanical properties to a molded article; a resin composition containing the same; a method of producing the resin composition; and a molded article.

### MODE FOR CARRYING OUT THE INVENTION

Embodiments of the present invention will now be described in detail. First, the additive composition according to the present embodiment will be described.

### <Additive Composition>

The additive composition of the present embodiment contains: (A) a nucleating agent; (B) a hydroxy group-containing fatty acid lithium salt; and (C) a hydrotalcite. The (A) nucleating agent contains an organic oxoacid metal salt. Further, the content of the (B) hydroxy group-containing fatty acid lithium salt is 25 to 400 parts by mass with respect to 100 parts by mass of the (A) nucleating agent, and the content of the (C) hydrotalcite is 25 to 400 parts by mass with respect to 100 parts by mass of the (A) nucleating agent.

The additive composition of the present embodiment can impart excellent mechanical properties to a molded article.

The reason why the additive composition of the present embodiment imparts excellent mechanical properties to a molded article is not clear; however, the present inventors presume as follows. That is, the present inventors presume that the organic oxoacid metal salt contained in the (A) nucleating agent, the (B) hydroxy group-containing fatty acid lithium salt, and the (C) hydrotalcite form some kind of aggregate through electrostatic interaction and hydrogen bonding, and this aggregate acts as a nucleating component of a polyolefin-based resin, allowing the additive composition of the present embodiment to impart excellent mechanical properties to a molded article.

The (A) nucleating agent contains an organic oxoacid metal salt. The "organic oxoacid metal salt" refers to a salt composed of an anion, which is a conjugate base of an organic oxoacid, and a metal cation. The "organic oxoacid" refers to an organic acid that has at least one substituent containing an atom to which a hydroxy group and an oxo group are bound. Specific examples of the organic oxoacid include aliphatic phosphoric acids, alicyclic phosphoric acids, aromatic phosphoric acids, aliphatic phosphates, alicyclic phosphates, aromatic phosphates, aliphatic carboxylic acids, alicyclic carboxylic acids, aromatic carboxylic acids, aliphatic sulfonic acids, alicyclic sulfonic acids, aromatic sulfonic acids, and rosin acids. Further, examples of the metal cation constituting the organic oxoacid metal salt include alkali metal ions, alkaline earth metal ions, aluminum ion, hydroxyaluminum ion, dihydroxyaluminum ion, and zinc ion. It is noted here that the (A) nucleating agent may contain an organic oxoacid metal salt singly, or in combination of two or more thereof.

Examples of the aromatic phosphate metal salt include compounds represented by the following Formula (1). Such an aromatic phosphate metal salt may be contained singly, or in combination of two or more thereof.

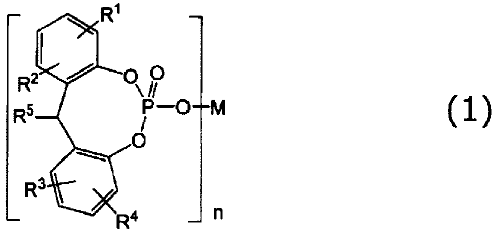

In Formula (1), R¹ to R⁵ each independently represent a hydrogen atom or an alkyl group having 1 to 6 carbon atoms; n represents 1 or 2; when n is 1, M represents an alkali metal or dihydroxyaluminum; and when n is 2, M represents an alkaline earth metal, zinc, or hydroxy aluminum.

Examples of the alkyl group having 1 to 6 carbon atoms that is represented by R¹ to R⁵ include a methyl group, an ethyl group, an *n*-propyl group, an isopropyl group, a cyclopropyl group, an *n*-butyl group, a *sec*-butyl group, a *te*rt-butyl group, an isobutyl group, a cyclobutyl group, an *n*-amyl group, a *tert*-amyl group, a cyclopentyl group, an *n*-hexyl group, and a cyclohexyl group. From the standpoint of imparting superior rigidity and superior impact resistance to a molded article, R¹ to R⁴ are particularly preferably *tert*-butyl groups. Further, from the standpoint of imparting a molded article with superior rigidity and superior impact resistance, R⁵ is preferably a hydrogen atom or a methyl group, particularly preferably a hydrogen atom.

From the standpoint of imparting superior rigidity and superior impact resistance to a molded article, M is preferably sodium, lithium, hydroxyaluminum, or dihydroxyaluminum, more preferably sodium or dihydroxyaluminum, particularly preferably sodium.

Specific examples of the aromatic phosphate metal salt represented by Formula (1) include the followings. It is noted here, however, that the aromatic phosphate metal salt represented by Formula (1) is not limited to the followings.

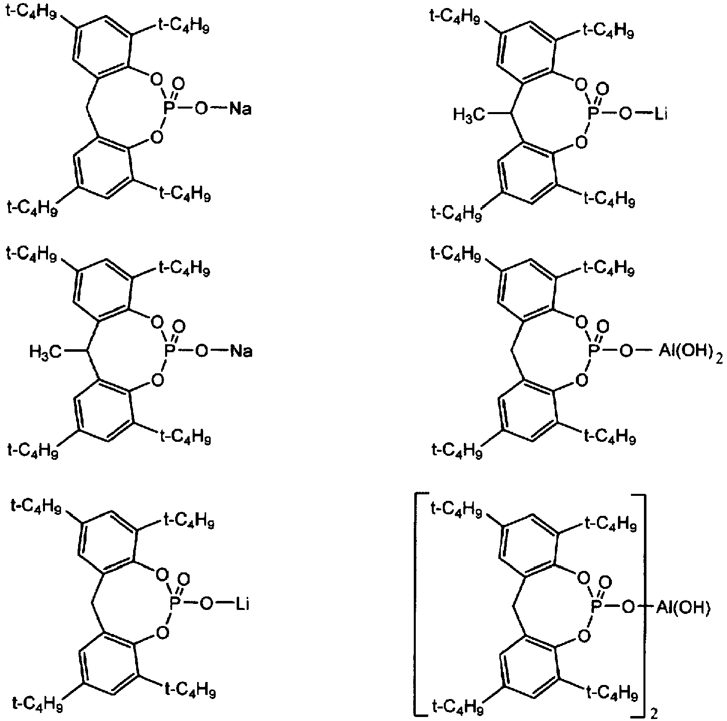

Thereamong, from the standpoint of imparting superior rigidity and superior impact resistance to a molded article, sodium 2,2'-methylene-bis(4,6-di-*tert*-butylphenyl)phosphate, lithium 2,2'-methylene-bis(4,6-di-*tert*-butylphenyl)phosphate, hydroxyaluminum bis[2,2'-methylene-bis(4,6-di-*tert*-butylphenyl)phosphate], or dihydroxyaluminum 2,2'-methylene-bis(4,6-di-*tert*-butylphenyl)phosphate is preferred, sodium 2,2'-methylene-bis(4,6-di-*tert-*butylphenyl)phosphate or hydroxyaluminum bis[2,2'-methylene-bis(4,6-di-*tert-*butylphenyl)phosphate] is more preferred, and sodium 2,2'-methylene-bis(4,6-di-*tert-*butylphenyl)phosphate is particularly preferred.

Examples of the metal aromatic carboxylate include sodium benzoate, aluminum tris(4-*t*-butyl benzoate), hydroxyaluminum bis(4-*t*-butyl benzoate), and dihydroxyaluminum (4-*t*-butyl benzoate). Thereamong, from the standpoint of imparting superior rigidity and impact resistance to a molded article, sodium benzoate or hydroxyaluminum bis(4-*t*-butyl benzoate) is preferred. The metal aromatic carboxylate may be contained singly, or in combination of two or more thereof.

Examples of the metal alicyclic dicarboxylate include disodium 2,3-norbomanedicarboxylate, disodium 2,5-norbomanedicarboxylate, disodium 2,6-norbomanedicarboxylate, calcium 1,2-cyclohexanedicarboxylate, calcium 1,3-cyclohexanedicarboxylate, and disodium 1,4-cyclohexanedicarboxylate. Thereamong, from the standpoint of imparting superior rigidity and impact resistance to a molded article, disodium 2,3-norbornanedicarboxylate or calcium 1,2-cyclohexanedicarboxylate is preferred. The metal alicyclic dicarboxylate may be contained singly, or in combination of two or more thereof.

Examples of a metal rosinate include sodium salts, calcium salts, magnesium salts, and the like of rosin acids such as abietic acid, palustric acid, and isopimaric acid.

In the additive composition of the present embodiment, it is preferred that the organic oxoacid metal salt contained in the (A) nucleating agent contain an aromatic phosphate metal salt. In this case, the additive composition can impart particularly excellent rigidity and impact resistance to a molded article.

It is also preferred that the organic oxoacid metal salt contained in the (A) nucleating agent contain a metal aromatic carboxylate. In this case, the additive composition can impart particularly excellent impact resistance to a molded article.

Further, it is also preferred that the organic oxoacid metal salt contained in the (A) nucleating agent contain a metal alicyclic dicarboxylate. In this case, the additive composition can impart particularly excellent rigidity to a molded article.

In the additive composition of the present embodiment, the (A) nucleating agent may further contain a compound other than the above-described organic oxoacid metal salt, which compound has a function of facilitating the crystallization of a polyolefin-based resin. Examples of such a compound include: polyol derivatives, such as dibenzylidene sorbitol, bis(methylbenzylidene)sorbitol, bis(3,4-dimethylbenzylidene)sorbitol, bis(*p-*ethylbenzylidene)sorbitol, bis(dimethylbenzylidene)sorbitol, and 1,2,3-trideoxy-4,6:5,7-*o-*bis(4-propylbenzylidene)nonitol; and amide compounds, such as *N*,*N*',*N*"-tris[2-methylcyclohexyl]-1,2,3-propane tricarboxamide, *N*,*N*',*N*"-tricyclohexyl-1,3,5-benzene tricarboxamide, *N*,*N*'*-*dicyclohexylnaphthalene dicarboxamide, and 1,3,5-tri(dimethylisopropoylamino)benzene. The content ratio of the organic oxoacid metal salt with respect to a total amount of the (A) nucleating agent may be 80 to 100% by mass, and it is preferably 90 to 100% by mass, more preferably 99 to 100% by mass, particularly preferably 100% by mass.

Examples of the (B) hydroxy group-containing fatty acid lithium salt include lithium salts of fatty acids having 12 to 30 carbon atoms that contain a linear or branched fatty acid residue in which 1 to 3 hydrogen atoms are substituted with a hydroxy group(s), specifically lithium salts of fatty acids such as hydroxylauric acid, hydroxymyristic acid, hydroxypalmitic acid, hydroxystearic acid, hydroxyarachidic acid, hydroxybehenic acid, hydroxymontanic acid, hydroxyoleic acid, hydroxylinoleic acid, hydroxylinolenic acid, dihydroxylauric acid, dihydroxymyristic acid, dihydroxypalmitic acid, dihydroxystearic acid, dihydroxyarachidic acid, dihydroxybehenic acid, dihydroxymontanic acid, dihydroxyoleic acid, dihydroxylinoleic acid, dihydroxylinolenic acid, trihydroxylauric acid, trihydroxymyristic acid, trihydroxypalmitic acid, trihydroxystearic acid, trihydroxyarachidic acid, trihydroxybehenic acid, trihydroxymontanic acid, trihydroxyoleic acid, trihydroxylinoleic acid, and trihydroxylinolenic acid. These lithium salts may be contained singly, or in combination of two or more thereof. Among these lithium salts, from the standpoint of imparting superior rigidity and impact resistance to a molded article, lithium hydroxystearate or lithium hydroxyoleate is preferred. Further, from the standpoint of availability, lithium 12-hydroxystearate or lithium 12-hydroxyoleate (lithium ricinoleate) is more preferred, and lithium 12-hydroxystearate is particularly preferred.

As described above, the content of the (B) hydroxy group-containing fatty acid lithium salt is 25 to 400 parts by mass with respect to 100 parts by mass of the (A) nucleating agent. From the standpoint of imparting superior rigidity and impact resistance to a molded article, the content of the (B) hydroxy group-containing fatty acid lithium salt is preferably not less than 33 parts by mass, more preferably not less than 50 parts by mass, with respect to 100 parts by mass of the (A) nucleating agent. Further, from the same standpoint, the content of the (B) hydroxy group-containing fatty acid lithium salt is preferably 200 parts by mass or less, more preferably 100 parts by mass or less, with respect to 100 parts by mass of the (A) nucleating agent.

The (C) hydrotalcite may be any complex salt compound containing magnesium, aluminum, hydroxy groups, carbonate groups, and arbitrary crystal water, and may be a natural or synthetic product. Further, in the hydrotalcite, at least some of the magnesium or aluminum atoms may be substituted with other metal such as an alkali metal or zinc, and at least some of the hydroxy groups and the carbonate groups may be substituted with other anionic groups. From the standpoint of imparting superior rigidity and impact resistance to a molded article, the hydrotalcite contained in the additive composition of the present embodiment preferably contains a compound represented by the following Formula (2) or (3):

Mg_{y1}Zn_{y2}Al₂(OH)_{2(y1+y2)+4}(CO₃) • pH₂O (2)

[Li_{1/3}Al_{2/3}(OH)₂]·[A^{q-}_{1/3q}·pH₂O] (3)

In Formula (2), y1 and y2 represent numbers satisfying 0 ≤ y2/y1 < 10 and 2 ≤ y1 + y2 ≤ 20, and p represents 0 or a positive number. In Formula (3), A^{q-} represents a q-valent anion, and p represents 0 or a positive number. From the standpoint of imparting superior rigidity and impact resistance to a molded article, the hydrotalcite is more preferably a compound represented by Formula (2), still more preferably a compound represented by Formula (2) in which y2 = 0. In the hydrotalcite, the crystal water may be dehydrated, and the hydrotalcite may be coated with, for example, a higher fatty acid such as stearic acid, a higher fatty acid metal salt such as alkali metal oleate, a metal organic sulfonate such as alkali metal dodecylbenzenesulfonate, a higher fatty acid amide, a higher fatty acid ester, or a wax. The hydrotalcite may be a naturally-occurring hydrotalcite or a synthetic hydrotalcite.

Examples of a method of producing the hydrotalcite include known methods that are described in JPS46-2280B1, JPS50-30039B1, JPS51-29129B1, JPH03-36839B2, JPS61-174270A, JPH05-179052A, and the like. The crystal structure, the particle shape, and the particle size of the hydrotalcite are not particularly limited. Further, the hydrotalcite may be contained singly, or in combination of two or more thereof.

As described above, the content of the (C) hydrotalcite is 25 to 400 parts by mass with respect to 100 parts by mass of the (A) nucleating agent. From the standpoint of imparting superior rigidity to a molded article, the content of the (C) hydrotalcite is preferably not less than 50 parts by mass, more preferably not less than 100 parts by mass, with respect to 100 parts by mass of the (A) nucleating agent. Further, from the same standpoint, the content of the (C) hydrotalcite is preferably 200 parts by mass or less, more preferably 150 parts by mass or less, with respect to 100 parts by mass of the (A) nucleating agent.

The content of the (C) hydrotalcite with respect to 100 parts by mass of the (B) hydroxy group-containing fatty acid lithium salt is not particularly limited and may be, for example, 10 to 1,000 parts by mass. From the standpoint of imparting superior rigidity and impact resistance to a molded article, the content of the (C) hydrotalcite is preferably 20 to 500 parts by mass, more preferably 25 to 400 parts by mass, with respect to 100 parts by mass of the (B) hydroxy group-containing fatty acid lithium salt.

The additive composition of the present embodiment may further contain, as required, various additives such as a phenolic antioxidant, a phosphorus-based antioxidant, a sulfur-based antioxidant, other antioxidant, a hindered amine compound, an ultraviolet absorber, a fatty acid metal salt other than the hydroxy group-containing fatty acid lithium salt, a flame retardant, a flame retardant aid, a lubricant, a filler, an antistatic agent, a fluorescent brightener, a pigment, and a dye.

Examples of the phenolic antioxidant include 2,6-di-*tert*-butyl-4-ethylphenol, *2-tert-*butyl-4,6-dimethylphenol, styrenated phenol, 2,2'-methylene-bis(4-ethyl-6-*tert*-butylphenol), 2,2'-thiobis-(6-*tert*-butyl-4-methylphenol), 2,2'-thiodiethylene-bis[3-(3,5-di-*tert*-butyl-4-hydroxyphenyl)propionate], 2-methyl-4,6-bis(octylsulfanylmethyl)phenol, 2,2'-isobutylidene-bis(4,6-dimethylphenol), isooctyl-3-(3,5-di-*tert*-butyl-4-hydroxyphenyl)propionate, *N,N'-*hexane-1,6-diylbis[3-(3,5-di-*tert*-butyl-4-hydroxyphenyl)propionamide], 2,2'-oxamide-bis[ethyl-3-(3,5-di-*tert*-butyl-4-hydroxyphenyl)propionate], 2-ethylhexyl-3-(3',5'-di-*tert-*butyl-4'-hydroxyphenyl)propionate, 2,2'-ethylene-bis(4,6-di-*tert*-butylphenol), esters of 3,5-di-*tert*-butyl-4-hydroxybenzene propanoic acid and a C13-15 alkyl, 2,5-di-*tert-*amylhydroquinone, hindered phenol polymers (e.g., trade name "AO.OH.98" manufactured by ADEKA Polymer Additives Europe SAS), 2,2'-methylene-bis[6-(1-methylcyclohexyl)-*p-*cresol], 2-*tert*-butyl-6-(3-*tert*-butyl-2-hydroxy-5-methylbenzyl)-4-methylphenyl acrylate, 2-[1-(2-hydroxy-3,5-di-*tert*-pentylphenyl)ethyl]-4,6-di-*tert*-pentylphenyl acrylate, 6-[3-(3-*tert-*butyl-4-hydroxy-5-methyl)propoxy]-2,4,8,10-tetra-*tert*-butylbenzo[*d*,*f*][1,3,2]-dioxaphosphepin, hexamethylene-bis[3-(3,5-di-*tert*-butyl-4-hydroxyphenyl)propionate], calcium bis[monoethyl(3,5-di-*tert*-butyl-4-hydroxybenzyl)phosphonate], a reaction product between 5,7-bis(1,1-dimethylethyl)-3-hydroxy-2(3*H*)-benzofuranone and *o*-xylene, 2,6-di-*tert*-butyl-4-(4,6-bis(octylthio)-1,3,5-triazine-2-ylamino)phenol, DL-a-tocophenol (vitamin E), 2,6-bis(*α*-methylbenzyl)-4-methylphenol, bis[3,3-bis-(4'-hydroxy-3'-*tert*-butyl-phenyl)butanoic acid]glycol ester, 2,6-di-*tert*-butyl-*p*-cresol, 2,6-diphenyl-4-octadecyloxyphenol, stearyl(3,5-di-*tert*-butyl-4-hydroxyphenyl)propionate, distearyl(3,5-di-*tert*-butyl-4-hydroxybenzyl)phosphonate, tridecyl-3,5-*tert*-butyl-4-hydroxybenzyl thioacetate, thiodiethylene-bis[(3,5-di-*tert*-butyl-4-hydroxyphenyl)propionate], 4,4'-thiobis(6-*tert*-butyl-*m*-cresol), 2-octylthio-4,6-di(3,5-di-*tert*-butyl-4-hydroxyphenoxy)-*s*-triazine, 2,2'-methylene-bis(4-methyl-6-*tert*-butylphenol), bis[3,3-bis(4-hydroxy-3-*tert*-butylphenyl)butyric acid]glycol ester, 4,4'-butylidene-bis(2,6-di-*tert*-butylphenol), 4,4'-butylidene-bis(6-*tert*-butyl-3-methylphenol), 2,2'-ethylidene-bis(4,6-di-*tert*-butylphenol), 1,1,3-tris(2-methyl-4-hydroxy-5-*tert*-butylphenyl)butane, bis[2-*tert*-butyl-4-methyl-6-(2-hydroxy-3-*tert*-butyl-5-methylbenzyl)phenyl]terephthalate, 1,3,5-tris(2,6-dimethyl-3-hydroxy-4-*tert-*butylbenzyl)isocyanurate, 1,3,5-tris(3,5-di-*tert-*butyl-4-hydroxybenzyl)isocyanurate, 1,3,5-tris(3,5-di-*tert*-butyl-4-hydroxybenzyl)-2,4,6-trimethylbenzene, 1,3,5-tris[(3,5-di-*tert*-butyl-4-hydroxyphenyl)propionyloxyethyl]isocyanurate, tetrakis[methylene-3-(3',5'-*tert*-butyl-4'-hydroxyphenyl)propionate]methane, 2-*tert*-butyl-4-methyl-6-(2-acryloyloxy-3-*tert*-butyl-5-methylbenzyl)phenol, 3,9-bis[2-(3-*tert*-butyl-4-hydroxy-5-methylhydrocinnamoyloxy)-1,1-dimethylethyl]-2,4,8,10-tetraoxaspiro[5.5]undecane, triethylene glycol-bis[*β*-(3-*tert*-butyl-4-hydroxy-5-methylphenyl)propionate], and 3-(3,5-dialkyl-4-hydroxyphenyl)propionic acid derivatives, such as stearyl-3-(3,5-di-*tert*-butyl-4-hydroxyphenyl)propionic acid amide, palmityl-3-(3,5-di-*tert*-butyl-4-hydroxyphenyl)propionic acid amide, myristyl-3-(3,5-di-*tert-*butyl-4-hydroxyphenyl)propionic acid amide, and lauryl-3-(3,5-di-*tert*-butyl-4-hydroxyphenyl)propionic acid amide.

Examples of the phosphorus-based antioxidant include triphenyl phosphite, diisooctyl phosphite, heptakis(dipropylene glycol) triphosphite, triisodecyl phosphite, diphenyl isooctyl phosphite, diisooctyl phenyl phosphite, diphenyl tridecyl phosphite, triisooctyl phosphite, trilauryl phosphite, diphenyl phosphite, tris(dipropylene glycol) phosphite, dioleyl hydrogen phosphite, trilauryl trithiophosphite, bis(tridecyl) phosphite, tris(isodecyl) phosphite, tris(tridecyl) phosphite, diphenyl decyl phosphite, dinonyl phenyl-bis(nonylphenyl) phosphite, poly(dipropylene glycol)phenyl phosphite, tetraphenyl dipropylene glycol diphosphite, trisnonyl phenyl phosphite, tris(2,4-di-*tert*-butylphenyl) phosphite, tris(2,4-di-*tert*-butyl-5-methylphenyl) phosphite, tris[2-*tert*-butyl-4-(3-*tert*-butyl-4-hydroxy-5-methylphenylthio)-5-methylphenyl]phosphite, tri(decyl) phosphite, octyl diphenyl phosphite, di(decyl)monophenyl phosphite, mixtures of distearyl pentaerythritol and calcium stearate, alkyl(C10) bisphenol-A phosphite, tetraphenyl-tetra(tridecyl)pentaerythritol tetraphosphite, bis(2,4-di-*tert*-butyl-6-methylphenyl)ethyl phosphite, tetra(tridecyl)isopropylidene diphenol diphosphite, tetra(tridecyl)-4,4'-*n*-butylidene-bis(2-tert-butyl-5-methylphenol) diphosphite, hexa(tridecyl)-1,1,3-tris(2-methyl-4-hydroxy-5-*tert-*butylphenyl)butane triphosphite, tetrakis(2,4-di-*tert*-butylphenyl)biphenylene diphosphonite, 9,10-dihydro-9-oxa-10-phosphaphenanthrene-10-oxide, (1-methyl-1-propenyl-3-ylidene)tris(1,1-dimethylethyl)-5-methyl-4,1-phenylene)hexatridecyl phosphite, 2,2'-methylene-bis(4,6-di-*tert*-butylphenyl)-2-ethylhexyl phosphite, 2,2'-methylene-bis(4,6-di-*tert-*butylphenyl)-octadecyl phosphite, 2,2'-ethylidene-bis(4,6-di-*tert*-butylphenyl) fluorophosphite, 4,4'-butylidene-bis(3-methyl-6-*tert*-butylphenylditridecyl) phosphite, tris(2-[(2,4,8,10-tetrakis-*tert*-butyldibenzo[*d*,*f*][1,3,2]dioxaphosphepin-6-yl)oxy]ethyl)amine, 3,9-bis(4-nonylphenoxy)-2,4,8,10-tetraoxa-3,9-diphosphaspiro[5,5]undecane, 2,4,6-tri-*tert-*butylphenyl-2-butyl-2-ethyl-1,3-propanediol phosphite, poly-4,4'-isopropylidene diphenol C12-15 alcohol phosphite, bis(diisodecyl)pentaerythritol diphosphite, bis(tridecyl)pentaerythritol diphosphite, bis(octadecyl)pentaerythritol diphosphite, bis(nonylphenyl)pentaerythritol diphosphite, bis(2,4-di-*tert*-butylphenyl)pentaerythritol diphosphite, bis(2,4,6-tri-*tert*-butylphenyl)pentaerythritol diphosphite, bis(2,6-di-*tert*-butyl-4-methylphenyl)pentaerythritol diphosphite, and bis(2,4-dicumylphenyl)pentaerythritol diphosphite.

Examples of the sulfur-based antioxidant include tetrakis[methylene-3-(laurylthio)propionate]methane, bis(methyl-4-[3-*n*-alkyl(C12/C14)thiopropionyloxy]-5-*tert-*butylphenyl)sulfide, ditridecyl-3,3'-thiodipropionate, dilauryl-3,3'-thiodipropionate, dimyristyl-3,3'-thiodipropionate, distearyl-3,3'-thiodipropionate, lauryl/stearyl thiodipropionate, 4,4'-thiobis(6-tert-butyl-m-cresol), 2,2'-thiobis(6-tert-butyl-p-cresol), distearyl disulfide.

Examples of the other antioxidant include: nitrone compounds, such as *N*-benzyl-*α-*phenyl nitrone, *N*-ethyl-*α*-methyl nitrone, *N*-octyl-*α*-heptyl nitrone, *N*-lauryl-*α*-undecyl nitrone, *N*-tetradecyl-α-tridecyl nitrone, *N*-hexadecyl-*α*-pentadecyl nitrone, *N*-octyl-*α-*heptadecyl nitrone, *N*-hexadecyl-*α*-heptadecyl nitrone, *N*-octadecyl-*α*-pentadecyl nitrone, *N-*heptadecyl-*a*-heptadecyl nitrone, and *N*-octadecyl-*α*-heptadecyl nitrone; and benzofuran compounds, such as 3-arylbenzofuran-2(3*H*)-one, 3-(alkoxyphenyl)benzofuran-2-one, 3-(acyloxyphenyl)benzofuran-2(3*H*)-one, 5,7-di-*tert*-butyl-3-(3,4-dimethylphenyl)-benzofuran-2(3*H*)-one, 5,7-di-*tert*-butyl-3-(4-hydroxyphenyl)-benzofuran-2(3*H*)-one, 5,7-di-*tert*-butyl-3-{4-(2-hydroxyethoxy)phenyl}-benzofuran-2(3*H*)-one, 6-(2-(4-(5,7-di-*tert*-2-oxo-2,3-dihydrobenzofuran-3-yl)phenoxy)ethoxy)-6-oxohexyl-6-((6-hydroxyhexanoyl)oxy)hexanoate, and 5-di-*tert*-butyl-3-(4-((15-hydroxy-3,6,9,13-tetraoxapentadecyl)oxy)phenyl)benzofuran-2(3*H*)-one.

Examples of the hindered amine compound include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl)·di(tridecyl)-1,2,3,4-butanetetracarboxylate, bis(1,2,2,6,6-pentamethyl-4-piperidyl)·di(tridecyl)-1,2,3,4-butanetetracarboxylate, bis(1,2,2,4,4-pentamethyl-4-piperidyl)-2-butyl-2-(3,5-di-*tert*-butyl-4-hydroxybenzyl)malonate, 1-(2-hydroxyethyl)-2,2,6,6-tetramethyl-4-piperidinol/diethyl succinate polycondensates, 1,6-bis(2,2,6,6-tetramethyl-4-piperidylamino)hexane/2,4-dichloro-6-morpholino-s-triazine polycondensates, 1,6-bis(2,2,6,6-tetramethyl-4-piperidylamino)hexane/2,4-dichloro-6-*tert*-octylamino-*s*-triazine polycondensate, 1,5,8,12-tetrakis[2,4-bis(*N*-butyl-*N*-(2,2,6,6-tetramethyl-4-piperidyl)amino)-*s*-triazine-6-yl]-1,5,8,12-tetraazadodecane, 1,5,8,12-tetrakis[2,4-bis(*N*-butyl-*N*-(1,2,2,6,6-pentamethyl-4-piperidyl)amino)-s-triazine-6-yl]-1,5,8,12-tetraazadodecane, 1,6,11-tris[2,4-bis(*N*-butyl-*N-*(2,2,6,6-tetramethyl-4-piperidyl)amino)-s-triazine-6-ylamino]undecane, 1,6,11-tris[2,4-bis(*N-*butyl-*N*-(1,2,2,6,6-pentamethyl-4-piperidyl)amino)-*s*-triazine-6-ylamino]undecane, 3,9-bis[1,1-dimethyl-2- f tris(2,2,6,6-tetramethyl-4-piperidyloxycarbonyl)butylcarbonyloxy}ethyl]-2,4,8,10-tetraoxaspiro[5.5]undecane, 3,9-bis[1,1-dimethyl-2- f tris(1,2,2,6,6-pentamethyl-4-piperidyloxycarbonyl)butylcarbonyloxy}ethyl]-2,4,8,10-tetraoxaspiro[5.5]undecane, bis(1-undecyloxy-2,2,6,6-tetramethylpiperidin-4-yl)carbonate, 2,2,6,6-tetramethyl-4-piperidyl hexadecanoate, and 2,2,6,6-tetramethyl-4-piperidyl octadecanoate.

Examples of the ultraviolet absorber include; 2-hydroxybenzophenones, such as 2,4-dihydroxybenzophenone and 5,5'-methylene-bis(2-hydroxy-4-methoxybenzophenone); 2-(2-hydroxyphenyl)benzotriazoles, such as 2-(2-hydroxy-5-methylphenyl)benzotriazole, 2-(2-hydroxy-5-*tert*-octylphenyl)benzotriazole, 2-(2-hydroxy-3,5-di-*tert*-butylphenyl)-5-chlorobenzotriazole, 2-(2-hydroxy-3-*tert*-butyl-5-methylphenyl)-5-chlorobenzotriazole, 2-(2-hydroxy-3,5-dicumylphenyl)benzotriazole, 2,2'-methylene-bis(4-*tert*-octyl-6-benzotriazolyl phenol), polyethylene glycol esters of 2-(2-hydroxy-3-*tert*-butyl-5-carboxyphenyl)benzotriazole, 2-[2-hydroxy-3-(2-acryloyloxyethyl)-5-methylphenyl]benzotriazole, 2-[2-hydroxy-3-(2-methacryloyloxyethyl)-5-*tert-*butylphenyl]benzotriazole, 2-[2-hydroxy-3-(2-methacryloyloxyethyl)-5-*tert-*octylphenyl]benzotriazole, 2-[2-hydroxy-3-(2-methacryloyloxyethyl)-5-*tert*-butylphenyl]-5-chlorobenzotriazole, 2-[2-hydroxy-5-(2-methacryloyloxyethyl)phenyl]benzotriazole, 2-[2-hydroxy-3-*tert*-butyl-5-(2-methacryloyloxyethyl)phenyl]benzotriazole, 2-[2-hydroxy-3-*tert-*amyl-5-(2-methacryloyloxyethyl)phenyl]benzotriazole, 2-[2-hydroxy-3-*tert*-butyl-5-(3-methacryloyloxypropyl)phenyl]-5-chlorobenzotriazole, 2-[2-hydroxy-4-(2-methacryloyloxymethyl)phenyl]benzotriazole, 2-[2-hydroxy-4-(3-methacryloyloxy-2-hydroxypropyl)phenyl]benzotriazole, and 2-[2-hydroxy-4-(3-methacryloyloxypropyl)phenyl]benzotriazole; benzoates, such as phenyl salicylate, resorcinol monobenzoate, 2,4-di-*tert*-butylphenyl-3,5-di-*tert*-butyl-4-hydroxybenzoate, octyl(3,5-di-*tert-*butyl-4-hydroxy)benzoate, dodecyl(3,5-di-*tert*-butyl-4-hydroxy)benzoate, tetradecyl(3,5-di-*tert*-butyl-4-hydroxy)benzoate, hexadecyl(3,5-di-*tert*-butyl-4-hydroxy)benzoate, octadecyl(3,5-di-*tert*-butyl-4-hydroxy)benzoate, and behenyl(3,5-di-*tert*-butyl-4-hydroxy)benzoate; substituted oxanilides, such as 2-ethyl-2'-ethoxyoxanilide and 2-ethoxy-4'-dodecyloxanilide; cyanoacrylates, such as ethyl-*α*-cyano-*β*,*β*-diphenyl acrylate and methyl-2-cyano-3-methyl-3-(*p*-methoxyphenyl)acrylate; triazines, such as 2-(4,6-diphenyl-1,3,5-triazine-2-yl)-5-hexyloxyphenol, 2-(2-hydroxy-4-octoxyphenyl)-4,6-bis(2,4-dimethylphenyl)-1,3,5-triazine, trioctyl-2,2',2"-((1,3,5-triazine-2,4,6-triyl)tris(3-hydroxybenzene-4-,1-diyl)tripropionate), 2-(4,6-diphenyl-1,3,5-triazine-2-yl)-5-[2-(2-ethylhexanoyloxy)ethoxy]phenol, 2,4,6-tris(2-hydroxy-4-hexyloxy-3-methylphenyl)-1,3,5-triazine, and 1,12-bis[2-[4-(4,6-diphenyl-1,3,5-triazine-2-yl)-3-hydroxyphenoxy]ethyl]dodecane dioate; and a variety of metal salts and metal chelates, particularly salts and chelates of nickel and chromium.

Examples of the fatty acid metal salt other than the hydroxy group-containing fatty acid lithium salt include metal salts of fatty acids having 12 to 30 carbon atoms that contain a linear or branched fatty acid residue. Examples of a metal ion constituting the fatty acid metal salt include a sodium ion, a potassium ion, a lithium ion, a dihydroxyaluminum ion, a calcium ion, a zinc ion, a barium ion, a magnesium ion, and a hydroxyaluminum ion, among which a sodium ion, a potassium ion, a lithium ion, or a calcium ion is preferred. Examples of a fatty acid constituting the fatty acid metal salt include lauric acid, myristic acid, palmitic acid, stearic acid, oleic acid, linoleic acid, linolenic acid, arachidic acid, arachidonic acid, behenic acid, lignoceric acid, cerotic acid, montanic acid, and melissic acid, among which myristic acid or stearic acid is preferred.

Examples of the flame retardant include: aromatic phosphates, such as triphenyl phosphate, tricresyl phosphate, trixylenyl phosphate, cresyl diphenyl phosphate, cresyl-2,6-dixylenyl phosphate, resorcinol-bis(diphenyl phosphate), (1-methylethylidene)-4,1-phenylene tetraphenyl diphosphate, and 1,3-phenylene-tetrakis(2,6-dimethylphenyl)phosphate, as well as "ADK STAB FP-500", "ADK STAB FP-600" and "ADK STAB FP-800" (trade names, manufactured by ADEKA Corporation); phosphonates, such as divinyl phenylphosphonate, diallyl phenylphosphonate, and (1-butenyl) phenylphosphonate; phosphinates, such as phenyl diphenylphosphinate, methyl diphenylphosphinate, and 9,10-dihydro-9-oxa-10-phosphaphenanthlene-10-oxide derivatives; phosphazene compounds, such as bis(2-allylphenoxy)phosphazene and dicresyl phosphazene; phosphorus-based flame retardants, such as melamine phosphate, melamine pyrophosphate, melamine polyphosphate, melam polyphosphate, ammonium polyphosphate, piperazine phosphate, piperazine pyrophosphate, piperazine polyphosphate, phosphorus-containing vinylbenzyl compounds, and red phosphorus; metal hydroxides, such as magnesium hydroxide and aluminum hydroxide; and bromine-based flame retardants, such as brominated bisphenol A-type epoxy resins, brominated phenol novolac-type epoxy resins, hexabromobenzene, pentabromotoluene, ethylene-bis(pentabromophenyl), ethylene-bis-tetrabromophthalimide, 1,2-dibromo-4-(1,2-dibromoethyl)cyclohexane, tetrabromocyclooctane, hexabromocyclododecane, bis(tribromophenoxy)ethane, brominated polyphenylene ether, brominated polystyrene, 2,4,6-tris(tribromophenoxy)-1,3,5-triazine, tribromophenyl maleimide, tribromophenyl acrylate, tribromophenyl methacrylate, tetrabromobisphenol A-type dimethacrylate, pentabromobenzyl acrylate, and brominated styrene. These flame retardants are preferably used in combination with a drip inhibitor such as a fluorocarbon resin, and/or a flame retardant aid such as a polyhydric alcohol or a hydrotalcite.

Examples of the lubricant include: unsaturated fatty acid amides, such as oleic acid amide and erucic acid amide; saturated fatty acid amides, such as behenic acid amide and stearic acid amide; butyl stearate; stearyl alcohol; stearic acid monoglyceride; sorbitan monopalmitate; sorbitan monostearate; mannitol; stearic acid; hardened castor oil; stearic acid amide; oleic acid amide; and ethylene-bis stearic acid amide.

Examples of the filler include talc, mica, calcium carbonate, calcium oxide, calcium hydroxide, magnesium carbonate, magnesium hydroxide, magnesium oxide, magnesium sulfate, aluminum hydroxide, barium sulfate, glass powder, glass fibers, clays, dolomite, silica, alumina, potassium titanate whiskers, wollastonite, and fibrous magnesium oxysulfate, and any of these fillers can be used by appropriately selecting the particle size (the fiber diameter, the fiber length, and the aspect ratio in the case of a fibrous filler). Among these fillers, talc is particularly preferably used since it has an excellent effect of imparting rigidity and can be easily obtained. Further, the filler to be used may be subjected to a surface treatment as required.

Examples of the antistatic agent include low-molecular-weight antistatic agents based on nonionic, anionic, cationic, or amphoteric surfactants, and high-molecular-weight antistatic agents based on polymer compounds. Examples of the nonionic surfactants include: polyethylene glycol-type nonionic surfactants, such as higher alcohol ethylene oxide adducts, fatty acid ethylene oxide adducts, higher alkylamine ethylene oxide adducts, and polyolefin glycol ethylene oxide adducts; and polyhydric alcohol-type nonionic surfactants, such as polyethylene oxides, glycerin fatty acid esters, pentaerythritol fatty acid esters, sorbitol or sorbitan fatty acid esters, polyhydric alcohol alkyl ethers, and alkanolamine aliphatic amides. Examples of the anionic surfactants include: carboxylates, such as alkali metal salts of higher fatty acids; sulfates, such as higher alcohol sulfates and higher alkyl ether sulfates; sulfonates, such as alkylbenzene sulfonates, alkyl sulfonates, and paraffin sulfonates; and phosphates such as higher alcohol phosphates, and examples of the cationic surfactants include quaternary ammonium salts, such as alkyltrimethyl ammonium salts. Examples of the amphoteric surfactants include: amino acid-type amphoteric surfactants, such as higher alkyl aminopropionates; and betaine-type amphoteric surfactants, such as higher alkyl dimethylbetaines and higher alkyl dihydroxyethylbetaines. Among these surfactants, an anionic surfactant is preferred, and a sulfonate such as an alkylbenzene sulfonate, an alkyl sulfonate, or a paraffin sulfonate is particularly preferred.

Examples of the high-molecular-weight antistatic agents include ionomers, and block polymers containing a polyethylene glycol as a hydrophilic moiety. Examples of the ionomers include the ionomer disclosed in JP2010-132927A. Examples of the polymers containing a polyethylene glycol as a hydrophilic moiety include the polyether ester amide disclosed in JPH07-10989A, the polymer disclosed in US6552131 which is composed of a polyolefin and a polyethylene glycol, and the polymer disclosed in JP2016-023254A which is composed of a polyester and a polyethylene glycol.

The fluorescent brightener is a compound which enhances the whiteness or blueness of a molded article by a fluorescent action of absorbing ultraviolet rays of solar light and artificial light, converting the absorbed ultraviolet rays into visible light of purple to blue, and radiating the visible light. Examples of the fluorescent brightener include C.I. Fluorescent Brightener 184, which is a benzoxazole-based compound; C.I. Fluorescent Brightener 52, which is a coumarin-based compound; and C.I. Fluorescent Brighteners 24, 85 and 71, which are diaminostilbene disulfonic acid-based compounds.

The pigment is not particularly limited, and any commercially available pigment can be used. Specific examples of the pigment include PIGMENT RED 1, 2, 3, 9, 10, 17, 22, 23, 31, 38, 41, 48, 49, 88, 90, 97, 112, 119, 122, 123, 144, 149, 166, 168, 169, 170, 171, 177, 179, 180, 184, 185, 192, 200, 202, 209, 215, 216, 217, 220, 223, 224, 226, 227, 228, 240, and 254; PIGMENT ORANGE 13, 31, 34, 36, 38, 43, 46, 48, 49, 51, 52, 55, 59, 60, 61, 62, 64, 65, and 71; PIGMENT YELLOW 1, 3, 12, 13, 14, 16, 17, 20, 24, 55, 60, 73, 81, 83, 86, 93, 95, 97, 98, 100, 109, 110, 113, 114, 117, 120, 125, 126, 127, 129, 137, 138, 139, 147, 148, 150, 151, 152, 153, 154, 166, 168, 175, 180, and 185; PIGMENT GREEN 7, 10, and 36; PIGMENT BLUE 15, 15:1, 15:2, 15:3, 15:4, 15:5, 15:6, 22, 24, 29, 56, 60, 61, 62, and 64; and PIGMENT VIOLET 1, 15, 19, 23, 27, 29, 30, 32, 37, 40, and 50.

Examples of the dye include azo dyes, anthraquinone dyes, indigoid dyes, triarylmethane dyes, xanthene dyes, alizarin dyes, acridine dyes, stilbene dyes, thiazole dyes, naphthol dyes, quinoline dyes, nitro dyes, indamine dyes, oxazine dyes, phthalocyanine dyes, and cyanine dyes.

The additive composition of the present embodiment may be a one-pack composite additive obtained by further incorporating a granulation aid such as a binder, a wax, a solvent, or silica, and subsequently granulating the resultant. The additive composition of the present embodiment may also be a masterbatch further containing a polyolefin-based resin.

Examples of the polyolefin-based resin contained in the masterbatch include: polyethylene-based resins, such as low-density polyethylenes, linear low-density polyethylenes, high-density polyethylenes, cross-linked polyethylenes, and ultrahigh-molecular-weight polyethylenes; polypropylene-based resins, such as homopolypropylenes, random copolymer polypropylenes, block copolymer polypropylenes, impact copolymer polypropylenes, high-impact copolymer polypropylenes, and maleic anhydride-modified polypropylenes; *α*-olefin polymers, such as polybutene-1, cycloolefin polymers, poly-3-methyl-1-butenes, poly-3-methyl-1-pentenes, and poly-4-methyl-1-pentenes; and *α*-olefin copolymers, such as ethylene-methyl methacrylate copolymers and ethylene-vinyl acetate copolymers. These polyolefin-based resins may be used singly, or in combination of two or more thereof. Further, these polyolefin-based resins may be alloyed as well. Among these polyolefin-based resins, a polypropylene-based resin is particularly preferred as the polyolefin-based resin contained in the masterbatch. The molecular weight, the polymerization degree, the density, the softening point, the insoluble component-to-solvent ratio, the degree of stereoregularity, the presence or absence of a catalyst residue, the type and the blend ratio of each monomer used as a raw material, the type of a catalyst used for polymerization (e.g., a Ziegler catalyst or a metallocene catalyst), and the like of the polyolefin-based resin are not particularly limited, and are selected as appropriate.

When the additive composition is a masterbatch containing a polyolefin-based resin, the content of the polyolefin-based resin in the masterbatch may be, for example, 90% by mass or less, and it is preferably 80% by mass or less, more preferably 60% by mass or less. Meanwhile, the content of the polyolefin-based resin in the masterbatch may be, for example, 20% by mass or more.

Next, the resin composition according to the present embodiment will be described.

### <Resin Composition>

The resin composition of the present embodiment contains: a polyolefin-based resin; (A) a nucleating agent; (B) a hydroxy group-containing fatty acid lithium salt; and (C) a hydrotalcite. The (A) nucleating agent contains an organic oxoacid metal salt. The content of the (B) hydroxy group-containing fatty acid lithium salt is 25 to 400 parts by mass with respect to 100 parts by mass of the (A) nucleating agent, and the content of the (C) hydrotalcite is 25 to 400 parts by mass with respect to 100 parts by mass of the (A) nucleating agent. Further, the content of the (A) nucleating agent is 0.001 to 10 parts by mass with respect to 100 parts by mass of the polyolefin-based resin. The resin composition of the present embodiment can yield a molded article having excellent mechanical properties.

Examples of the polyolefin-based resin contained in the resin composition of the present embodiment include the same ones as those exemplified above for the polyolefin-based resin contained in the masterbatch. Thereamong, a polypropylene-based resin is preferred. In this case, a molded article having excellent heat resistance is obtained. Further, from the standpoint of providing the molded article with superior rigidity and impact resistance, it is preferred that not less than 90% by mass of monomer units constituting the polypropylene-based resin be propylene units. From the standpoint of providing the molded article with further superior rigidity and impact resistance, it is more preferred that not less than 95% by mass of monomer units constituting the polypropylene-based resin be propylene units, it is still more preferred that not less than 99% by mass of monomer units constituting the polypropylene-based resin be propylene units, and it is particularly preferred that 100% by mass of monomer units constituting the polypropylene-based resin be propylene units, i.e. the polypropylene-based resin be a homopolypropylene. From the standpoint of providing the molded article with superior rigidity and impact resistance, the melt flow rate of the polypropylene-based resin at a cylinder temperature of 230°C and a load of 2.16 kg is preferably 40 g/10 min or less, more preferably 10 g/10 min or less, still more preferably 5 g/10 min or less. Further, the melt flow rate of the polypropylene-based resin at a cylinder temperature of 230°C and a load of 2.16 kg is preferably 0.1 g/10 min or higher, more preferably 1 g/10 min or higher, still more preferably 2 g/10 min or higher.

Examples of the (A) nucleating agent, the (B) hydroxy group-containing fatty acid lithium salt, and the (C) hydrotalcite that are contained in the resin composition of the present embodiment include the same ones as those exemplified above as the respective components that are contained in the above-described additive composition. As described above, the content of the (B) hydroxy group-containing fatty acid lithium salt is 25 to 400 parts by mass with respect to 100 parts by mass of the (A) nucleating agent. From the standpoint of obtaining a molded article having superior rigidity and impact resistance, the content of the (B) hydroxy group-containing fatty acid lithium salt is preferably not less than 33 parts by mass, more preferably not less than 50 parts by mass, with respect to 100 parts by mass of the (A) nucleating agent. Further, from the same standpoint, the content of the (B) hydroxy group-containing fatty acid lithium salt is preferably 200 parts by mass or less, more preferably 100 parts by mass or less, with respect to 100 parts by mass of the (A) nucleating agent.

As described above, the content of the (C) hydrotalcite is 25 to 400 parts by mass with respect to 100 parts by mass of the (A) nucleating agent. From the standpoint of obtaining a molded article having superior rigidity, the content of the (C) hydrotalcite is preferably not less than 50 parts by mass, more preferably not less than 100 parts by mass, with respect to 100 parts by mass of the (A) nucleating agent. Further, from the same standpoint, the content of the (C) hydrotalcite is preferably 200 parts by mass or less, more preferably 150 parts by mass or less, with respect to 100 parts by mass of the (A) nucleating agent.

The content of the (C) hydrotalcite with respect to 100 parts by mass of the (B) hydroxy group-containing fatty acid lithium salt is not particularly limited and may be, for example, 10 to 1,000 parts by mass. From the standpoint of obtaining a molded article having superior rigidity and impact resistance, the content of the (C) hydrotalcite is preferably 20 to 500 parts by mass, more preferably 25 to 400 parts by mass, with respect to 100 parts by mass of the (B) hydroxy group-containing fatty acid lithium salt.

As described above, in the resin composition of the present embodiment, the content of the (A) nucleating agent is 0.001 to 10 parts by mass with respect to 100 parts by mass of the polyolefin-based resin. When the content of the (A) nucleating agent is less than 0.001 parts by mass with respect to 100 parts by mass of the polyolefin-based resin, a molded article having sufficient mechanical properties cannot be obtained. Meanwhile, when the content of the (A) nucleating agent is greater than 10 parts by mass with respect to 100 parts by mass of the polyolefin-based resin, blooming may occur on the surface of a molded article, and/or migration of the (A) nucleating agent may occur. From the standpoint of obtaining a molded article having superior rigidity and impact resistance and sufficiently inhibiting the occurrence of blooming as well as the migration of the (A) nucleating agent, the content of the (A) nucleating agent is preferably 0.005 to 5 parts by mass, more preferably 0.01 to 1 part by mass, still more preferably 0.01 to 0.5 parts by mass, yet still more preferably 0.02 to 0.2 parts by mass, with respect to 100 parts by mass of the polyolefin-based resin. Further, in the resin composition of the present embodiment, the content of the (B) hydroxy group-containing fatty acid lithium salt with respect to 100 parts by mass of the polyolefin-based resin may be, for example, 0.001 to 10 parts by mass, and it is preferably 0.005 to 5 parts by mass, more preferably 0.01 to 1 part by mass, still more preferably 0.01 to 0.5 parts by mass, yet still more preferably 0.02 to 0.2 parts by mass. Moreover, in the resin composition of the present embodiment, the content of the (C) hydrotalcite with respect to 100 parts by mass of the polyolefin-based resin may be, for example, 0.001 to 10 parts by mass, and it is preferably 0.005 to 5 parts by mass, more preferably 0.01 to 1 part by mass, still more preferably 0.01 to 0.5 parts by mass, yet still more preferably 0.02 to 0.2 parts by mass.

The resin composition of the present embodiment contains a polyolefin-based resin and the above-described additive composition, and the content of the additive composition may be 0.001 to 10 parts by mass with respect to 100 parts by mass of the polyolefin-based resin.

The resin composition of the present embodiment may further contain, as required, various additives such as a phenolic antioxidant, a phosphorus-based antioxidant, a sulfur-based antioxidant, other antioxidant, a hindered amine compound, an ultraviolet absorber, a fatty acid metal salt other than the hydroxy group-containing fatty acid lithium salt, a flame retardant, a flame retardant aid, a lubricant, a filler, an antistatic agent, a fluorescent brightener, a pigment, and a dye. Examples of these various additives include the same ones as those exemplified above as additives that may be contained in the above-described additive composition.

Next, the method of producing a resin composition according to the present embodiment will be described.

### <Method of Producing Resin Composition>

The method of producing a resin composition according to the present embodiment includes a step of blending the above-described additive composition into a polyolefin-based resin. The method of producing a resin composition according to the present embodiment may include steps other than the step of blending the above-described additive composition into a polyolefin-based resin, such as a preparation step of preparing in advance the polyolefin-based resin, the additive composition, other optional additives, and the like.

A resin composition produced by the method of producing a resin composition according to the present embodiment can yield a molded article having excellent mechanical properties.

### (Preparation Step)

First, the above-described polyolefin-based resin and the above-described additive composition are prepared.

### (Blending Step)

Next, the additive composition is blended into the polyolefin-based resin. A blending method is not particularly limited and, for example, a method of adding the polyolefin-based resin, the additive composition and, as required, the above-described various additives, and subsequently mixing these materials using a mixing apparatus such as a Henschel mixer, a mill roll, a Banbury mixer, or a super mixer may be employed. In this process, the additive composition and at least one component of the above-described various additives may be added before or during polymerization of a polyolefin-based resin monomer or oligomer, and the remaining components may be added to the resulting polymer.

A resin composition is produced in the above-described manner. The method of producing a resin composition may also include a step of blending the (A) nucleating agent, the (B) hydroxy group-containing fatty acid lithium salt, the (C) hydrotalcite and, as required, the above-described various additives into the polyolefin-based resin. The method of producing a resin composition may further include a melt-kneading step of melt-kneading a mixture obtained by the above-described method using a melt-kneading apparatus, such as a single-screw extruder or a twin-screw extruder. In this step, the melt-kneading temperature may be, for example, 220 to 280°C. Moreover, the method of producing a resin composition may include a granulation step of granulating a kneaded product obtained by the melt-kneading. A granulation method is not particularly limited and, for example, a method using a granulation apparatus such as a pelletizer may be employed. The shape of the resin composition obtained by the granulation is not particularly limited, and the resin composition may be, for example, in a pellet form.

Next, an embodiment of the molded article of the present invention will be described.

### <Molded Article>

The molded article of the present embodiment is obtained by molding the above-described resin composition. This molded article has excellent mechanical properties.

Examples of the molded article of the present embodiment include injection-molded articles, fibers, flat yarns, biaxially stretched films, uniaxially stretched films, unstretched films, sheets, thermoformed articles, extrusion blow-molded articles, injection blow-molded articles, injection stretch blow-molded articles, profile extrusion-molded articles, and rotationally molded articles, more specifically automotive exterior components, automotive interior components, housings, containers, and pipes. Examples of the automotive exterior components include bumpers, radiator grilles, front grilles, front panels, fenders, pillars, pillar covers, door mirror stay covers, glass run channels, door mirror housings, lamp housings, wheel covers, spoilers, air spoilers, weather-strips, window moldings, belt moldings, sunroofs, front-end modules, door modules, back door modules, and outer plates, and examples of the automotive interior components include instrument panels, door trim panels, pillar trims, door trims, pillar garnishes, package trays, rear trays, console boxes, and air-conditioning ducts. Examples of the housings include housings for home electric appliances, housings for arcade gaming machines, housings for home-use gaming machines, housings for portable gaming machines, housings for cameras, housings for cellular phones, housings for smartphones, housings for electronic devices, housings for secondary batteries, and housings for safety breakers, and examples of the containers include: tableware; food containers, such as precooked food containers, frozen food containers, microwavable heat-resistant containers, frozen storage containers, retort containers, cups, and frozen dessert cups; bottle containers, such as beverage bottles, infusion bottles, and medical hollow bottles; containers for physicochemical tests, such as beakers and graduated cylinders; chemical containers; medical containers; detergent containers; cosmetic containers; perfume containers; and toner containers. Examples of the pipes include various pipes, such as infrastructure pipes (e.g., water pipes and gas pipes), plant utility pipes, vehicle fuel delivery pipes, and vehicle air intake pipes; various tubes, such as cosmetic/perfume spray tubes, medical tubes, and infusion tubes; various hoses, such as water hoses and vehicle air duct hoses.

A method of molding the molded article of the present invention is not particularly limited, and examples thereof include injection molding, extrusion molding, blow molding, rotational molding, vacuum molding, inflation molding, calender molding, slush molding, dip molding, and thermoform molding.

### EXAMPLES

The present invention will now be described more concretely by way of Examples thereof; however, the present invention is not limited to the following Examples and the like by any means.

The polyolefin-based resin, (A) nucleating agents, (B) hydroxy group-containing fatty acid lithium salt, and (C) hydrotalcite that were used in Examples are as follows.

### <Polyolefin-Based Resin>

(P-1): a homopolypropylene having a melt flow rate of 3 g/10 min as measured at a cylinder temperature of 230°C and a load of 2.16 kg

### <(A) Nucleating Agents>

(A-1) sodium 2,2'-methylene-bis(4,6-di-tert-butylphenyl)phosphate
(A-2) hydroxy aluminum bis[2,2'-methylene-bis(4,6-di-tert-butylphenyl)phosphate]
(A-3) sodium benzoate
(A-4) hydroxyaluminum bis(4-t-butyl benzoate)
(A-5) disodium 2,3-norbornanedicarboxylate
(A-6) calcium 1,2-cyclohexanedicarboxylate

### <(B) Hydroxy Group-Containing Fatty Acid Lithium Salt>

### (B-1) lithium 12-hydroxystearate

### (C) Hydrotalcite

### (C-1) hydrotalcite manufactured by Kyowa Chemical Industry Co., Ltd.: trade name "DHT-4V"

### <Preparation of Resin Compositions>

### (Examples 1 to 70)

With respect to 100 parts by mass of the polyolefin-based resin, (A) a nucleating agent, (B) a hydroxy group-containing fatty acid lithium salt, and (C) a hydrotalcite were added in the respective amounts shown in Tables 1 to 14, and 0.05 parts by mass of a phenolic antioxidant (tetrakis[methylene-3-(3',5'-*tert*-butyl-4'-hydroxyphenyl)propionate]methane), 0.1 parts by mass of a phosphorus-based antioxidant (tris(2,4-di-*tert*-butylphenyl)phosphite), and 0.05 parts by mass of a fatty acid metal salt (calcium stearate) were further added, after which the resultant was mixed for 1 minute using a Henschel mixer (FM200, manufactured by Mitsui Mining Co., Ltd.) at a rotation speed of 1,000 rpm. The thus obtained mixture was melt-kneaded using a twin-screw extruder (TEX-28V, manufactured by The Japan Steel Works, Ltd.) at a resin temperature of 230°C and a screw speed of 150 rpm, and subsequently granulated to obtain pellets. The thus obtained pellets were dried at 60°C for 8 hours and then used for evaluation of properties. It is noted here that, in Tables 1 to 14 below, the unit of amount is parts by mass.

### (Comparative Example 1)

Pellets of Comparative Example 1 were obtained in the same manner as in Example 57, except that the (A) nucleating agent, the (B) hydroxy group-containing fatty acid lithium salt, and the (C) hydrotalcite were not added.

### (Comparative Example 2)

Pellets of Comparative Example 2 were obtained in the same manner as in Example 57, except that the (B) hydroxy group-containing fatty acid lithium salt and the (C) hydrotalcite were not added.

### (Comparative Example 3)

Pellets of Comparative Example 3 were obtained in the same manner as in Example 57, except that the (B) hydroxy group-containing fatty acid lithium salt was not added.

### (Comparative Example 4)

Pellets of Comparative Example 4 were obtained in the same manner as in Example 57, except that (b-1) lithium stearate was added as (b) a hydroxy group-free fatty acid lithium salt in place of the (B) hydroxy group-containing fatty acid lithium salt.

### (Comparative Example 5)

Pellets of Comparative Example 5 were obtained in the same manner as in Example 57, except that (c-1) talc manufactured by Hayashi Kasei Co., Ltd. (trade name: Micron White 5000S) was added as (c) talc in place of the (C) hydrotalcite.

### <Evaluation of Properties>

### (Flexural Modulus)

The pellets of Examples 1 to 70 and Comparative Examples 1 to 5 were dried at 60°C for 8 hours and then molded using an injection molding machine (EC-220, manufactured by Toshiba Machine Co., Ltd.) at a resin temperature of 230°C and a mold temperature of 50°C to prepare bending test pieces of 80 mm × 10 mm × 4 mm in size. The thus obtained test pieces were left to stand for 168 hours in an incubator at temperature of 23°C and a humidity of 50%, after which the flexural modulus (MPa) of each test piece was measured in accordance with ISO178 using a bending tester (AG-IS, manufactured by Shimadzu Corporation). The results thereof are shown in Tables 1 to 14.

### (Charpy Impact Strength)

The pellets of Examples 1 to 70 and Comparative Examples 1 to 5 were dried at 60°C for 8 hours and then molded using an injection molding machine (NEX80, manufactured by Nissei Plastic Industrial Co., Ltd.) at a resin temperature of 230°C and a mold temperature of 50°C to prepare test pieces for measurement of Charpy impact strength, which had a size of 80 mm × 10 mm × 4 mm and a V-shaped notch in the central part. The thus obtained test pieces were left to stand for 168 hours in an incubator at temperature of 23°C and a humidity of 50%, after which the Charpy impact strength (kJ/m²) of each test piece was measured in accordance with ISO179-1. The results thereof are shown in Tables 1 to 14.

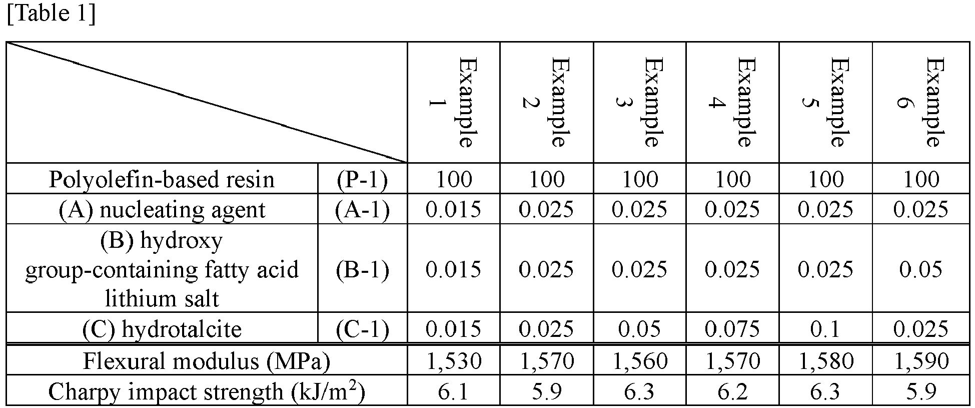

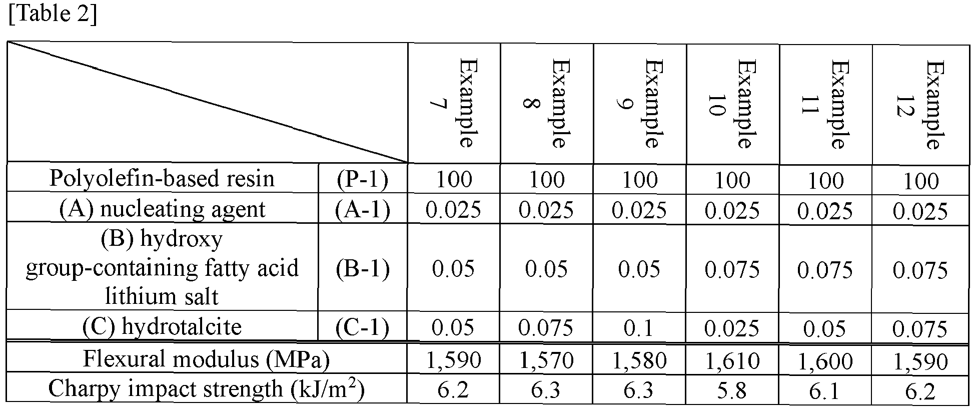

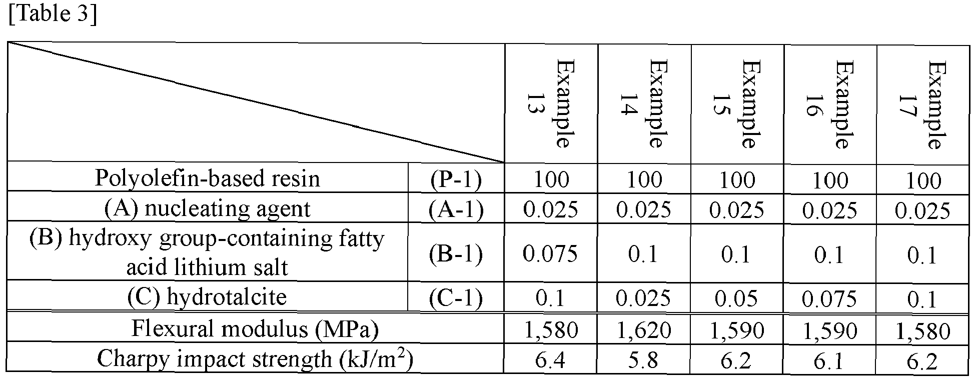

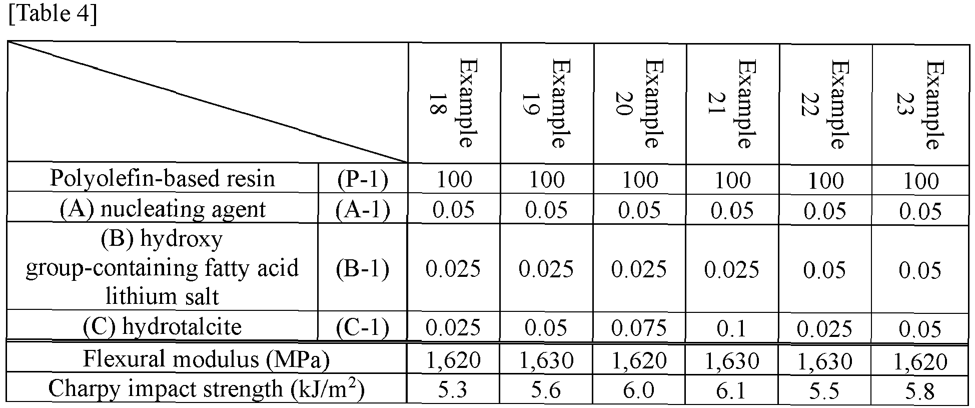

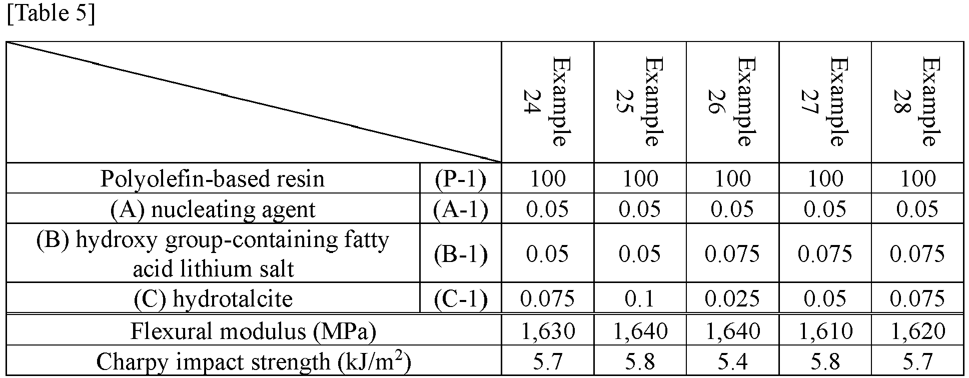

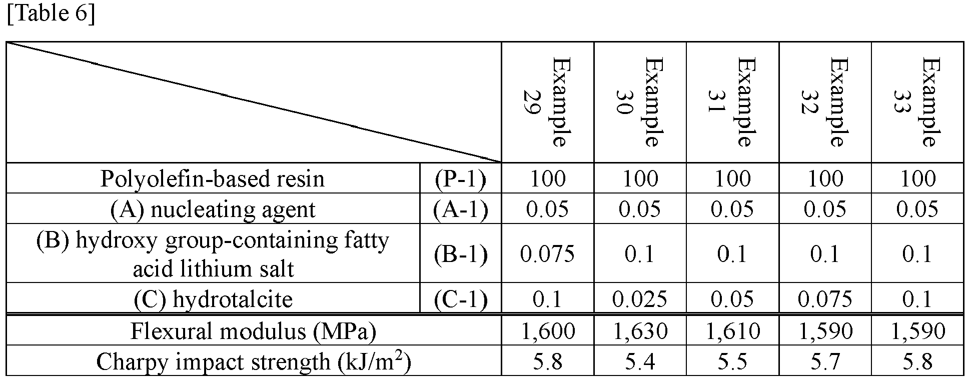

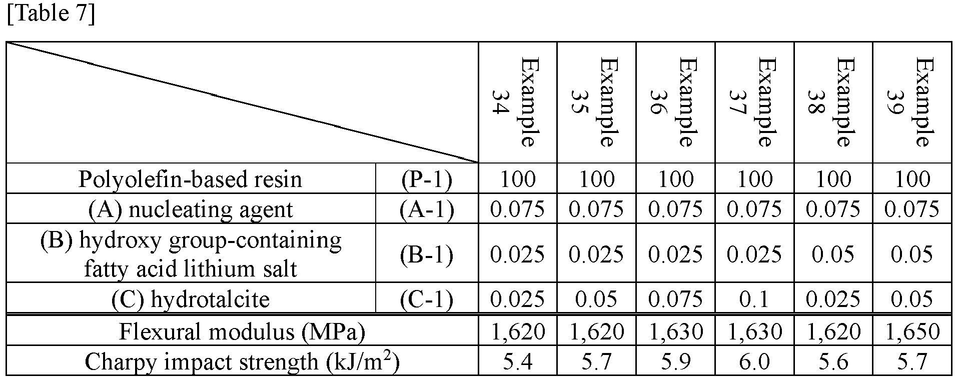

**[Table 8]**

| | | Example 40 | Example 41 | Example 42 | Example 43 | Example 44 |
|---|---|---|---|---|---|---|
| Polyolefin-based resin | (P-1) | 100 | 100 | 100 | 100 | 100 |
| (A) nucleating agent | (A-1) | 0.075 | 0.075 | 0.075 | 0.075 | 0.075 |
| (B) hydroxy group-containing fatty acid lithium salt | (B-1) | 0.05 | 0.05 | 0.075 | 0.075 | 0.075 |
| (C) hydrotalcite | (C-1) | 0.075 | 0.1 | 0.025 | 0.05 | 0.075 |
| Flexural modulus (MPa) | | 1,650 | 1,660 | 1,630 | 1,640 | 1,650 |
| Charpy impact strength (kJ/m²) | | 5.8 | 6.0 | 5.6 | 5.6 | 5.6 |

**[Table 9]**

| | | Example 45 | Example 46 | Example 47 | Example 48 | Example 49 |
|---|---|---|---|---|---|---|
| Polyolefin-based resin | (P-1) | 100 | 100 | 100 | 100 | 100 |
| (A) nucleating agent | (A-1) | 0.075 | 0.075 | 0.075 | 0.075 | 0.075 |
| (B) hydroxy group-containing fatty acid lithium salt | (B-1) | 0.075 | 0.1 | 0.1 | 0.1 | 0.1 |
| (C) hydrotalcite | (C-1) | 0.1 | 0.025 | 0.05 | 0.075 | 0.1 |
| Flexural modulus (MPa) | | 1,660 | 1,640 | 1,610 | 1,630 | 1,640 |
| Charpy impact strength (kJ/m²) | | 5.5 | 5.3 | 5.5 | 5.6 | 5.5 |

**[Table 10]**

| | | Example 50 | Example 51 | Example 52 | Example 53 | Example 54 | Example 55 |
|---|---|---|---|---|---|---|---|
| Polyolefin-based resin | (P-1) | 100 | 100 | 100 | 100 | 100 | 100 |
| (A) nucleating agent | (A-1) | 0.1 | 0.1 | 0.1 | 0.1 | 0.1 | 0.1 |
| (B) hydroxy group-containing fatty acid lithium salt | (B-1) | 0.025 | 0.025 | 0.025 | 0.025 | 0.05 | 0.05 |
| (C) hydrotalcite | (C-1) | 0.025 | 0.05 | 0.075 | 0.1 | 0.025 | 0.05 |
| Flexural modulus (MPa) | | 1,650 | 1,650 | 1,650 | 1,650 | 1,650 | 1,660 |
| Charpy impact strength (kJ/m²) | | 5.5 | 5.4 | 5.7 | 5.8 | 5.3 | 5.5 |

**[Table 11]**

| | | Example 56 | Example 57 | Example 58 | Example 59 | Example 60 |
|---|---|---|---|---|---|---|
| Polyolefin-based resin | (P-1) | 100 | 100 | 100 | 100 | 100 |
| (A) nucleating agent | (A-1) | 0.1 | 0.1 | 0.1 | 0.1 | 0.1 |
| (B) hydroxy group-containing fatty acid lithium salt | (B-1) | 0.05 | 0.05 | 0.075 | 0.075 | 0.075 |
| (C) hydrotalcite | (C-1) | 0.075 | 0.1 | 0.025 | 0.05 | 0.075 |
| Flexural modulus (MPa) | | 1,660 | 1,670 | 1,660 | 1,650 | 1,670 |
| Charpy impact strength (kJ/m²) | | 5.8 | 5.7 | 5.0 | 5.2 | 5.3 |

**[Table 12]**

| | | Example 61 | Example 62 | Example 63 | Example 64 | Example 65 |
|---|---|---|---|---|---|---|
| Polyolefin-based resin | (P-1) | 100 | 100 | 100 | 100 | 100 |
| (A) nucleating agent | (A-1) | 0.1 | 0.1 | 0.1 | 0.1 | 0.1 |
| (B) hydroxy group-containing fatty acid lithium salt | (B-1) | 0.075 | 0.1 | 0.1 | 0.1 | 0.1 |
| (C) hydrotalcite | (C-1) | 0.1 | 0.025 | 0.05 | 0.075 | 0.1 |
| Flexural modulus (MPa) | | 1,660 | 1,650 | 1,650 | 1,650 | 1,650 |
| Charpy impact strength (kJ/m²) | | 5.4 | 5.2 | 5.2 | 5.4 | 5.4 |

**[Table 13]**

| | | Example 66 | Example 67 | Example 68 | Example 69 | Example 70 |
|---|---|---|---|---|---|---|
| Polyolefin-based resin | (P-1) | 100 | 100 | 100 | 100 | 100 |
| (A) nucleating agent | (A-1) | - | - | - | - | - |
| | (A-2) | 0.06 | - | - | - | - |
| | (A-3) | 0.04 | 0.1 | - | - | - |
| | (A-4) | - | - | 0.1 | - | - |
| | (A-5) | - | - | - | 0.1 | - |
| | (A-6) | - | - | - | - | 0.1 |
| (B) hydroxy group-containing fatty acid lithium salt | (B-1) | 0.05 | 0.05 | 0.05 | 0.05 | 0.05 |
| (b) hydroxy group-free fatty acid lithium salt | (b-1) | - | - | - | - | - |
| (C) hydrotalcite | (C-1) | 0.1 | 0.1 | 0.1 | 0.1 | 0.1 |
| (c) talc | (c-1) | - | - | - | - | - |
| Flexural modulus (MPa) | | 1,780 | 1,520 | 1,570 | 1,620 | 1,630 |
| Charpy impact strength (kJ/m²) | | 6.6 | 6.2 | 6.1 | 4.3 | 4.5 |

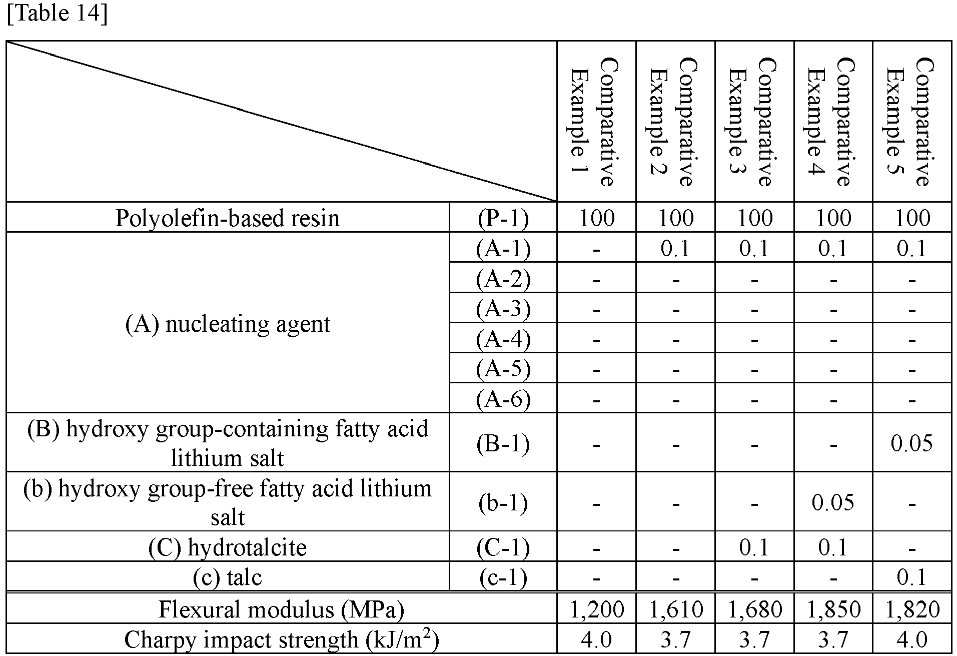

According to the results shown in Tables 1 to 14, the molded articles obtained by molding the pellets of Examples 1 to 70 had excellent rigidity and excellent impact resistance. On the other hand, it cannot be said that the molded articles obtained by molding the pellets of Comparative Examples 1 to 5 had sufficient rigidity or impact resistance.

From the above, it was confirmed that the additive composition of the present invention can impart excellent mechanical properties to a molded article.

## Claims

1. An additive composition, comprising:
(A) a nucleating agent;
(B) a hydroxy group-containing fatty acid lithium salt; and
(C) a hydrotalcite,
wherein
the (A) nucleating agent comprises an organic oxoacid metal salt,
the content of the (B) hydroxy group-containing fatty acid lithium salt is 25 to 400 parts by mass with respect to 100 parts by mass of the (A) nucleating agent, and
the content of the (C) hydrotalcite is 25 to 400 parts by mass with respect to 100 parts by mass of the (A) nucleating agent.

2. The additive composition according to claim 1, wherein the organic oxoacid metal salt comprises an aromatic phosphate metal salt.

3. The additive composition according to claim 1, wherein the organic oxoacid metal salt comprises a metal aromatic carboxylate.

4. The additive composition according to claim 1, wherein the organic oxoacid metal salt comprises a metal alicyclic dicarboxylate.

5. The additive composition according to any one of claims 1 to 4, wherein the (B) hydroxy group-containing fatty acid lithium salt comprises at least one selected from the group consisting of lithium hydroxystearate and lithium hydroxy oleate.

6. The additive composition according to any one of claims 1 to 5, wherein the (C) hydrotalcite comprises a compound represented by the following Formula (2) or (3):
Mg_{y1}Zn_{y2}Al₂(OH)_{2(y1+y2)+4}(CO₃) •pH₂O (2)
(wherein, y1 and y2 represent numbers satisfying 0 ≤ y2/y1 < 10 and 2 ≤ y1 + y2 ≤ 20, and p represents 0 or a positive number)
[Li_{1/3}Al_{2/3}(OH)₂]·[A^{q-}_{1/3q}·pH₂O] (3)
(wherein, A^{q-} represents a q-valent anion, and p represents 0 or a positive number).

7. A resin composition, comprising:
a polyolefin-based resin;
(A) a nucleating agent;
(B) a hydroxy group-containing fatty acid lithium salt; and
(C) a hydrotalcite,
wherein
the (A) nucleating agent comprises an organic oxoacid metal salt,
the content of the (B) hydroxy group-containing fatty acid lithium salt is 25 to 400 parts by mass with respect to 100 parts by mass of the (A) nucleating agent,
the content of the (C) hydrotalcite is 25 to 400 parts by mass with respect to 100 parts by mass of the (A) nucleating agent, and
the content of the (A) nucleating agent is 0.001 to 10 parts by mass with respect to 100 parts by mass of the polyolefin-based resin.

8. The resin composition according to claim 7, wherein the polyolefin-based resin is a polypropylene-based resin.

9. The resin composition according to claim 8, wherein not less than 90% by mass of monomer units constituting the polypropylene-based resin are propylene units.

10. A method of producing a resin composition, the method comprising a step of blending the additive composition according to any one of claims 1 to 6 into a polyolefin-based resin.

11. A molded article, obtained by molding the resin composition according to any one of claims 7 to 9.
